# EUROPÄISCHE PATENTSCHRIFT

(11) **EP 2 501 206 B1**
(45) Veröffentlichungstag und Bekanntmachung des Hinweises auf die Patenterteilung: **18.02.2015**
(21) Anmeldenummer: 12158976.6
(22) Anmeldetag: 12.03.2012
(51) Int. Cl.: H05B 33/08, B60Q 1/00

(54) **Beleuchtungseinrichtung für ein Kraftfahrzeug mit einer redundanten Ansteuerung von Lichtquellen**
Lighting device for a motor vehicle with a redundant control of light sources
Dispositif d'éclairage pour un véhicule automobile doté d'une commande redondante de sources lumineuses

(30) Priorität: 15.03.2011 DE 102011005582
(43) Veröffentlichungstag der Anmeldung: 19.09.2012
(73) Patentinhaber: Automotive Lighting Reutlingen GmbH, 72762 Reutlingen (DE)
(72) Erfinder: Brendle, Matthias, 72074 Tübingen (DE); Reichelt, Martin, 72116 Mössingen (DE)
(74) Vertreter: DREISS Patentanwälte PartG mbB

(56) Entgegenhaltungen:
- DE-A1- 10 351 890
- DE-A1-102008 025 748
- US-A1- 2009 066 262
- US-A1- 2011 025 215

## Beschreibung

Die vorliegende Erfindung betrifft eine Beleuchtungseinrichtung für ein Kraftfahrzeug mit wenigstens einer Lichtquelle, die dazu eingerichtet ist, aus zugeführter elektrischer Energie Licht zu erzeugen, und mit einer Ansteuerschaltung, die dazu eingerichtet ist, einen elektrischen Stromfluss durch die wenigstens eine Lichtquelle durch eine Betätigung eines mit der Lichtquelle gekoppelten Schaltelements zu steuern.

Eine solche Beleuchtungseinrichtung ist zum Beispiel aus der US 2009/0066262 A1 und der DE 10 2008 036 193 A1 sowie aus der US 2011/0025215 A1 bekannt. Die aus der DE 10 2008 036 193 A1 bekannte Beleuchtungseinrichtung ist ein Frontscheinwerfer, der eine Vielzahl von Halbleiterlichtquellen zur Erzeugung einer variablen, aus einzelnen Lichtfleckenzusammengesetzten, Spot-Lichtverteilung verwendet. In einer Ausgestaltung, die in der DE 10 2008 036 193 A1 beschrieben wird, sind 45 Halbleiterlichtquellen in Form von Leuchtdioden zu einem LED-Array mit 5 Zeilen und 9 Spalten zusammengefasst. Jede LED bildet ein Matrixelement des LED-Arrays. Die Summe der Lichtaustrittsflächen der LEDs bildet eine gerasterte Lichtaustrittsfläche des gesamten LED-Arrays, in der jede einzelne LED einem Pixel entspricht. Je nachdem, welche der gezielt und einzeln ansteuerbaren LEDs eingeschaltet ist, ergibt sich eine andere Lichtverteilung auf der Lichtaustrittsfläche des LED-Arrays. Diese variable Lichtverteilung wird durch eine Projektionsoptik als Spotlichtverteilung in das Vorfeld des Frontscheinwerfers projiziert.

Herkömmliche, mit Gasentladungslampen arbeitende Frontscheinwerfer sind in eine Richtung weiterentwickelt worden, in der verschiedene Abblendlichtverteilungen mit verschiedenen Hell-Dunkel-Grenzen wie Landstraßenlicht (schmale Lichtverteilung mit hoher Reichweite), Stadtlicht (breite Lichtverteilung mit niedriger Reichweite), dynamisches Kurvenlicht oder Teilfernlicht durch Schwenken des ganzen Lichtmoduls oder mit motorisch verstellbaren Blenden aus dem Licht einer einzigen Lichtquelle in Form einer Gasentladungslampe erzeugt worden sind.

Die oben erwähnte DE 10 2008 036 193 A1 repräsentiert dagegen eine andere Entwicklungsrichtung, in der versucht wird, verschiedene Lichtverteilungen nicht mit mechanischen Änderungen von Lichtmodul- und/oder Blendenpositionen zu erreichen, sondern mit einer Vielzahl von Lichtquellen, die unabhängig voneinander schaltbar sind. Die zu erzeugende Lichtverteilung wird dabei in unterschiedliche Felder aufgeteilt, von denen jedes von mindestens einer Lichtquelle beleuchtet werden kann, die auch nur dieses Feld beleuchtet. Durch selektives Einschalten und Ausschalten der beteiligten Lichtquellen lassen sich damit unterschiedliche Lichtverteilungen erzeugen. Dabei ist es unerheblich, ob jede Lichtquelle eine eigene fokussierende Optik besitzt oder ob mehrerer Lichtquellen, die zum Beispiel als LED-Matrix zu einer Baugruppe zusammengefasst sind, eine gemeinsame Optik, zum Beispiel eine Projektionslinse, nutzen. Ein solcher Scheinwerfer benötigt vergleichsweise weniger oder sogar keine motorischen Verstellelemente mehr, was den Aufbau und die Montage vereinfacht.

Scheinwerfer, bei denen die verschiedenen Lichtverteilungen mit Hilfe einer Vielzahl von Lichtquellen, insbesondere einer Vielzahl von Halbleiterlichtquellen wie LEDs gebildet werden, weisen jedoch Nachteile bei der Zuverlässigkeit der Lichterzeugung auf. Als Folge des Umstandes, dass in der Regel eine Vielzahl von Lichtquellen und Treiberelementen zur Erzeugung einer Lichtverteilung zusammenwirken müssen, und als Folge des Umstandes, dass die Ausfallwahrscheinlichkeiten der einzelnen Komponenten in erster Näherung voneinander unabhängig sind, ergibt sich die Wahrscheinlichkeit für eine fehlerfreie Funktion eines solchen Scheinwerfers als Produkt der Überlebenswahrscheinlichkeiten aller zusammenwirkenden Elemente. Dabei wird hier unter der Überlebenswahrscheinlichkeit eines Elements das Komplement zur Ausfallwahrscheinlichkeit des Elements betrachtet, wobei die Summe beider Wahrscheinlichkeiten für ein Element gleich 1 ist. Aufgrund der Vielzahl der Faktoren ergibt sich dann eine unbefriedigend kleine Gesamtwahrscheinlichkeit für eine fehlerfreie Funktion, selbst wenn die Überlebenswahrscheinlichkeiten der einzelne beteiligten Elemente große und damit nahe bei 1 liegende Werte besitzen.

Ausfälle einer einzelnen Lichtquelle oder eines einzelnen Treibers können zu zwei unterschiedlichen Konsequenzen führen. In einem Fall bleibt die Lichtquelle fehlerhaft eingeschaltet. Dies kann durch Kurzschlüsse oder Unterbrechungen in der Ansteuerelektronik verursacht werden. In einem anderen Fall bleibt die Lichtquelle fehlerhaft ausgeschaltet, was ebenfalls als Folge solcher Kurzschlüsse oder Unterbrechungen oder durch einen Ausfall der betroffenen Lichtquelle verursacht werden kann. Der erste Fall ist besonders kritisch bei Lichtquellen, die oberhalb einer vorgeschriebenen Hell-Dunkel-Grenze liegende Felder beleuchten. Der zweite Fall ist insbesondere bei Lichtquellen ungünstig, die unterhalb der vorgeschriebenen Hell-Dunkel-Grenze liegende Felder beleuchten und bei eingeschaltetem Abblendlicht immer eingeschaltet sein sollten.

Dieses Problem besteht nicht nur bei Frontscheinwerfern, die eine das Vorfeld beleuchtende Lichtverteilung erzeugen sollen, sondern auch bei Kraftfahrzeugleuchten, die andere Verkehrsteilnehmer auf das Kraftfahrzeug und/oder sein Verhalten aufmerksam machen sollen. Dies gilt sowohl für Bugleuchten wie Tagfahrleuchten, die eigentlich immer eingeschaltet sein sollten, als auch für Heckleuchten. Bei Heckleuchten sind zum Beispiel fehlerhaft leuchtende oder fehlerhaft nicht leuchtende Bremsleuchten und Schlussleuchten kritisch. Kritisch sind auch fehlerhaft dauernd oder fehlerhaft nicht leuchtende Blinkleuchten, unabhängig davon, ob es sich um Bug- oder Heckleuchten handelt.

Die vorliegende Erfindung betrifft sowohl Leuchten als auch Scheinwerfer. Der eingangs verwendete Begriff der Beleuchtungseinrichtung wird hier daher als Oberbegriff für Scheinwerfer und Leuchten verwendet. Ein Austausch einzelner fehlerhafter Elemente ist häufig nicht oder nur mit unwirtschaftlich großem Aufwand möglich, da moderne Beleuchtungseinrichtungen zunehmend in weitgehend geschlossenen Gehäusen untergebracht sind, die nach der Herstellung nicht mehr zerstörungsfrei geöffnet werden können. Der Austausch kompletter Beleuchtungseinrichtungen ist ebenfalls sehr teuer.

Vor diesem Hintergrund besteht die Aufgabe der Erfindung in der Angabe einer zuverlässigeren Beleuchtungseinrichtung mit geringerer Wahrscheinlichkeit von unerwünscht leuchtenden und/oder unerwünscht nicht leuchtenden Lichtquellen.

Diese Aufgabe wird bei einer Beleuchtungseinrichtung der eingangs genannten Art durch die Merkmale des Anspruchs 1 gelöst.

Die Erfindung zeichnet sich dadurch aus, dass die Ansteuerschaltung mehrere redundante Schaltelemente aufweist und dazu eingerichtet ist, den Stromfluss durch eine synchrone gemeinsame Betätigung der redundanten Schaltelemente zu steuern, wobei die reduntanten Schaltelemente jeweils gemeinsam eingeschaltet und ausgeschaltet werden.

Dabei wird unter redundanten Schaltelementen eine Mehrzahl von innerhalb der Ansteuerschaltung zusammen und untereinander gleich wirkenden Schaltelementen verstanden. Ein fehlerhaft nicht mehr schließendes erstes Schaltelement kann zum Beispiel durch ein parallel liegendes und damit gleichwirkendes zweites Schaltelement überbrückt werden. Dieser Fehler des ersten Schaltelements tritt dann nicht mehr in Erscheinung. In einen anderem Beispiel wird die unerwünschte Wirkung eines fehlerhaft dauernd geschlossenen ersten Schaltelements, die darin besteht, dass der zugehörige Strompfad nicht geöffnet wird, durch ein zweites Schaltelement vermieden, das in Reihe mit dem ersten Schaltelement liegt und für die gewünschte Unterbrechung des Strompfades sorgt.

Unter mehreren innerhalb der Ansteuerschaltung zusammen und untereinander gleich wirkenden Schaltelementen werden dabei mindestens zwei Schaltelemente verstanden, von denen eines bei einem störungsfreien Betrieb nicht benötigt wird. Parallel zueinander liegende Schaltelemente sind dann redundant, wenn man im fehlerfreien Zustand eines wegnehmen kann, ohne die Funktion der Schaltung zu verändern. In Reihe liegende Schaltelemente sind dann redundant, wenn man im fehlerfreien Zustand eines durch ein Leiterstückchen erstetzen kann, ohne die Funktion der Schaltung zu ändern.

Eine vorteilhafte Ausgestaltung zeichnet sich dadurch aus, dass die Ansteuerschaltung parallel zu der Lichtquelle geschaltet ist.

Je nach Ausgestaltung der Ansteuerschaltung erlaubt diese Ausgestaltung eine zuverlässigere Ausschaltbarkeit oder Einschaltbarkeit der Lichtquelle.

Dabei sieht eine Alternative vor, dass wenigstens zwei redundante Schaltelemente der Ansteuerschaltung zueinander und zu der Lichtquelle parallel geschaltet sind. Mit dieser Alternative wird die Zuverlässigkeit der Ausschaltbarkeit der Lichtquelle erhöht, weil bereits ein gewünscht geschlossenes Schaltelement ausreicht, um die Lichtquelle stromlos zu schalten.

Eine weitere Alternative sieht vor, dass wenigstens zwei redundante Schaltelemente der Ansteuerschaltung in Reihe zueinander geschaltet sind, wobei die Reihenschaltung der Schaltelemente parallel zu der Lichtquelle geschaltet ist. Diese Ausgestaltung hat den Vorteil, dass bereits ein gewünscht offenes Schaltelement ausreicht, um den Strompfad über die Lichtquelle einzuschalten.

Eine andere Ausgestaltung sieht vor, dass die Ansteuerschaltung in Reihe zu der Lichtquelle geschaltet ist.

Auch diese Ausgestaltung erlaubt je nach Ausgestaltung der Ansteuerschaltung eine zuverlässigere Ausschaltbarkeit oder Einschaltbarkeit der Lichtquelle.

Für eine zuverlässige Einschaltbarkeit ist bevorzugt, dass wenigstens zwei redundante Schaltelemente der Ansteuerschaltung parallel zueinander und zu der Lichtquelle in Reihe geschaltet sind. Dann reicht bereits ein gewünscht geschlossenes Schaltelement aus, um den Strompfad über die Lichtquelle einzuschalten.

Für eine zuverlässigere Ausschaltbarkeit ist bevorzugt, dass wenigstens zwei redundante Schaltelemente der Ansteuerschaltung in Reihe zueinander geschaltet sind, wobei die Reihenschaltung der Schaltelemente in Reihe zu der Lichtquelle geschaltet ist. Die sicherere Ausschaltbarkeit ergibt sich hier dadurch, dass bereits ein gewünscht offenes Schaltelement ausreicht, um die Lichtquelle stromlos zu schalten.

Besonders bevorzugte Ausgestaltungen sehen eine Kombination von Reihenschaltungen und Parallelschaltungen jeweils paarweise redundanter Schaltelemente vor.

Eine solche Ausgestaltung zeichnet sich dadurch aus, dass die redundanten Schaltelemente wenigstens eine erste Gruppe von Schaltelementen und wenigstens eine zweite Gruppe von Schaltelementen aufweisen, wobei die erste Gruppe untereinander parallel geschaltete Schaltelemente aufweist, die zweite Gruppe untereinander parallel geschaltete Schaltelemente aufweist, und die erste Gruppe und die zweite Gruppe zueinander in Reihe geschaltet sind. Diese Ausgestaltung ergibt sowohl eine Steigerung der Zuverlässigkeit der Ausschaltbarkeit als auch eine Steigerung der Zuverlässigkeit der Einschaltbarkeit.

Um sicher Strom zu führen, reicht es bei einer solchen Ansteuerschaltung aus, dass lediglich ein Schaltelement jeder Gruppe geschlossen werden kann. Liegt die Ansteuerschaltung mit der Lichtquelle in Reihe, wird diese dadurch zuverlässig eingeschaltet. Liegt die Ansteuerschaltung parallel zu der Lichtquelle, wird diese dadurch sicher stromlos und damit ausgeschaltet.

Um sicher keinen Strom zu führen, reicht es aus dass die parallel liegenden Schaltelemente von lediglich einer der beiden Gruppen zeitgleich geöffnet werden können. Liegt die Ansteuerschaltung mit der Lichtquelle in Reihe, wird diese dadurch zuverlässig ausgeschaltet. Liegt die Ansteuerschaltung parallel zu der Lichtquelle, wird diese dadurch sicher stromführend und damit eingeschaltet.

Eine alternativ bevorzugte Ausgestaltung sieht vor, dass die redundanten Schaltelemente wenigstens eine erste Gruppe von Schaltelementen und wenigstens eine zweite Gruppe von Schaltelementen aufweisen, wobei die erste Gruppe untereinander in Serie geschaltete Schaltelemente aufweist, die zweite Gruppe untereinander in Serie geschaltete Schaltelemente aufweist, und die erste Gruppe und die zweite Gruppe zueinander parallel geschaltet sind.

Auch diese Ausgestaltung ergibt sowohl eine Steigerung der Zuverlässigkeit der Ausschaltbarkeit als auch eine Steigerung der Zuverlässigkeit der Einschaltbarkeit.

Um sicher Strom zu führen, reicht es bei einer solchen Ansteuerschaltung aus, dass lediglich beide Schaltelemente einer Gruppe geschlossen werden können. Liegt die Ansteuerschaltung mit der Lichtquelle in Reihe, wird diese dadurch zuverlässig eingeschaltet. Liegt die Ansteuerschaltung parallel zu der Lichtquelle, wird diese dadurch sicher stromlos und damit ausgeschaltet.

Um sicher keinen Strom zu führen, reicht es aus dass in jeder Gruppe lediglich eines der Schaltelemente dieser Gruppe geöffnet werden kann. Liegt die Ansteuerschaltung mit der Lichtquelle in Reihe, wird diese dadurch zuverlässig ausgeschaltet. Liegt die Ansteuerschaltung parallel zu der Lichtquelle, wird diese dadurch sicher stromführend und damit eingeschaltet.

Eine besonders bevorzugte Ausgestaltung zeichnet sich dadurch aus, dass die Beleuchtungseinrichtung ein mehrere Lichtquellen oder Gruppen von Lichtquellen aufweisender Frontscheinwerfer ist, der dazu eingerichtet ist, mit einer ersten Lichtquelle oder ersten Gruppe von Lichtquellen wenigstens eine erste Lichtverteilung zu erzeugen, bei der nur eine vergleichsweise geringe Blendungsgefahr für den Gegenverkehr besteht, und mit einer zweiten Lichtquelle oder Gruppe von Lichtquellen eine zweite Lichtverteilung zu erzeugen, bei der eine vergleichsweise größere Blendgefahr für den Gegenverkehr besteht, wobei eine zur ersten Lichtverteilung beitragende Lichtquelle eine sicher einschaltbare Ansteuerschaltung aufweist, und dass eine zur zweiten Lichtverteilung beitragende Lichtquelle eine sicher ausschaltbare Ansteuerschaltung aufweist.

Als Beispiel einer ersten Lichtverteilung kann eine gesetzeskonforme Abblendlichtverteilung betrachtet werden, während eine Fernlichtverteilung als Beispiel einer zweiten Lichtverteilung betrachtet werden kann. Durch diese Ausgestaltung kann die volle Wirkung des Abblendlichtes auch bei durch Kurzschlüsse oder Unterbrechungen verursachten Fehlern durch die Redundanz der Ansteuerschaltung aufrechterhalten werden. Eine regelwidrige Blendung, wie sie durch ähnliche Fehler in der Ansteuerelektronik der Fernlicht-Lichtquellen auftreten könnte, kann dagegen wirksam vermieden werden.

Bevorzugt ist auch, dass die Ansteuerschaltung für jedes Schaltelement Prüfkontakte aufweist, die eine zu Prüfzwecken erfolgende Kontaktierung der Schaltelemente bei der Fertigung der Ansteuerschaltung ermöglichen. Ein Ausfall von Reserveelementen wird sonst in der Endprüfung nicht bemerkt.

Bevorzugt ist auch, dass über die Schaltelemente hinaus den redundanten Schaltelementen vorgeschaltete Bauelemente, insbesondere aktive elektronische Bauelemente und Steckverbindungen durch zusätzliche funktionsmäßig jeweils gleichwirkende Reserveelemente ebenfalls redundant ausgeführt sind.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegeben Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Dabei zeigen, jeweils in schematischer Form:
- Fig. 1: eine Schnittdarstellung einer Beleuchtungseinrichtung für ein Kraftfahrzeug;
- Fig. 2: eine Ausgestaltung einer Primäroptik der Beleuchtungseinrichtung zusammen mit einer Anordnung von Halbleiterlichtquellen;
- Fig. 3: eine Lichtverteilung 54, die sich mit einer Beleuchtungseinrichtung nach den Fig. 1 und 2 einstellen lässt;
- Fig. 4: weitere Lichtverteilungen, die mit dem Gegenstand der Fig. 1 und 2 einstellbar sind;
- Fig. 5: einen Ausschnitt aus einer Ansteuerschaltung für parallel zueinander liegende Lichtquellen;
- Fig. 6: einen Ausschnitt aus einer Ansteuerschaltung für in Reihe geschaltete Lichtquellen;
- Fig. 7: eine Ausgestaltung einer Ansteuerung einer Lichtquelle mit erhöhter Sicherheit gegen ein ungewolltes Einschalten der Lichtquelle;
- Fig. 8: eine Ausgestaltung einer Ansteuerung einer Lichtquelle zur Erhöhung der Sicherheit gegen ein ungewolltes Ausschalten der Lichtquelle;
- Fig. 9: eine Ausgestaltung mit erhöhter Sicherheit gegen ein ungewolltes Ausschalten der Lichtquelle;
- Fig. 10: eine Ausgestaltung, die eine erhöhte Sicherheit gegen ein ungewolltes Einschalten der Lichtquelle liefert;
- Fig. 11: eine Ausgestaltung, bei der ein einzelnes Schaltelement durch eine Reihenschaltung von Parallelschaltungen von Schaltelementen substituiert worden ist; und
- Fig. 12: eine Ausgestaltung, bei der ein einzelnes Schaltelement durch eine Parallelschaltung von Reihenschaltungen substituiert worden ist.

Dabei bezeichnen gleiche Bezugszeichen in verschiedenen Figuren jeweils gleiche oder zumindest ihrer Funktion nach gleiche Elemente.

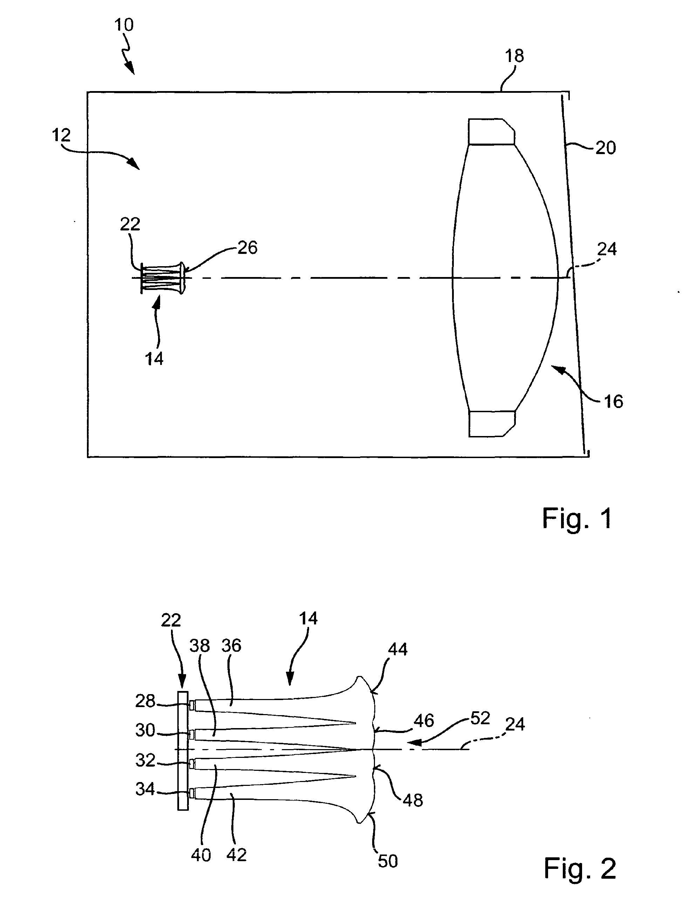

Im Einzelnen zeigt die Fig. 1 eine Schnittdarstellung einer Beleuchtungseinrichtung 10 für ein Kraftfahrzeug. Die Beleuchtungseinrichtung 10 weist ein Lichtmodul 12 mit einer matrixartigen Anordnung von Lichtquellen, insbesondere von Halbleiterlichtquellen, einer Primäroptik 14 und einer Sekundäroptik 16 auf.

Das Lichtmodul 12 ist in einem Gehäuse 18 der Beleuchtungseinrichtung 10 angeordnet. Das Gehäuse 18 weist eine Lichtaustrittsöffnung auf, die von einer transparenten Abdeckscheibe 20 abgedeckt wird. Die matrixartige Anordnung von Halbleiterlichtquellen ist in der dargestellten Ausgestaltung auf einer Platine 22 angeordnet.

Die Platine 22 ist in einer bevorzugten Ausgestaltung eine starre Leiterplatte oder eine flexible Leiterplatte. Eine flexible Leiterplatte hat den Vorteil, dass sie eine im Raum gekrümmte, insbesondere konkav gekrümmte Anschlussfläche für die Halbleiterlichtquellen erlaubt, durch die sich bereits eine gewisse bündelnde Wirkung ergibt. Starre Leiterplatten besitzen dagegen den Vorteil geringerer Kosten und einer besseren Handhabbarkeit bei der Herstellung des Scheinwerfers und einer größeren Stabilität.

Bevorzugt ist auch, dass die Platine als bauliche Einheit mit Kühlelementen für die Halbleiterlichtquellen ausgestaltet ist, um die im Betrieb anfallende elektrische Verlustwärme zuverlässig abführen zu können. Darüber hinaus ist bevorzugt, dass die Platine 22 auch die Ansteuerschaltung trägt, die in einer Ausgestaltung als anwendungsspezifische integrierte Schaltung realisiert ist. In einer zur Unterbringung auf der Platine 22 alternativen Ausgestaltung ist die Ansteuerschaltung getrennt von der Platine in oder an der Beleuchtungseinrichtung angebracht und über Kabel mit der Platine 22 verbunden.

Eine optische Achse 24 erstreckt sich im Wesentlichen horizontal von der Anordnung der Halbleiterlichtquellen ausgehend durch die Primäroptik 14 und die Sekundäroptik 16 hindurch. Fig. 1 zeigt insofern eine längs der optischen Achse 24 geschnittene Beleuchtungseinrichtung 10 von der Seite, d.h. aus einer quer zur optischen Achse 24 liegenden Blickrichtung. In der dargestellten Ausgestaltung handelt es sich bei der Beleuchtungseinrichtung um einen Scheinwerfer. Die Erfindung ist jedoch auch bei Leuchten verwendbar, seien es Bugleuchten wie Tagfahrleuchten, seien es Heckleuchten, wie Schlussleuchten oder Bremsleuchten, oder seien es Blinkleuchten.

Die folgende Erläuterung bezieht sich auf eine Ausgestaltung der Beleuchtungseinrichtung 10 als Scheinwerfer. Wegen des Bezuges auf Scheinwerfer wird in der folgenden Erläuterung auch auf Merkmale Bezug genommen, die nicht wesentlich für die von der Ausgestaltung als Scheinwerfer abstrahierte Erfindung sind. Die für die Erfindung wesentlichen Merkmale sind im Anspruch 1 zusammengefasst.

Bei der Sekundäroptik 16 handelt es sich in der dargestellten Ausgestaltung um eine Projektionslinse, die eine sich auf der Lichtaustrittsfläche 26 der Primäroptik 14 einstellende Lichtverteilung in das Vorfeld der Beleuchtungseinrichtung 10 projiziert. Dabei ergibt sich die Lichtverteilung auf der Lichtaustrittsfläche der Primäroptik 14 in Abhängigkeit vom Schaltzustand der auf der Platine 22 angeordneten und Licht in die Primäroptik 14 einspeisenden Halbleiterlichtquellen.

Fig. 2 zeigt eine Ausgestaltung einer Primäroptik 14 zusammen mit einer Anordnung von Halbleiterlichtquellen 28, 30, 32, 34 auf der Platine 22. Die Anordnung umfasst bevorzugt mehr als vier Halbleiterlichtquellen, von denen aus Gründen der Übersichtlichkeit nur vier dargestellt sind. Die Darstellung ist insoweit als rein schematische Darstellung zu verstehen. Die Halbleiterlichtquellen 28, 30, 32, 34 sind einzeln oder in Gruppen einschaltbar und ausschaltbar, so dass ihr jeweiliger Einfluss auf die Lichtverteilung vor dem Fahrzeug voneinander getrennt gezielt aktivierbar und deaktivierbar ist.

Als Halbleiterlichtquellen werden in einer Ausgestaltung Leuchtdioden (LEDs) verwendet. Die Halbleiterlichtquellen besitzen je nach Ausgestaltung eine rechteckige oder eine aufgrund der gewünschten Lichtverteilung von der Rechteckform abweichende Lichtaustrittsfläche und emittieren Licht in der für die jeweilige Lichtfunktion gewünschten Farbe, oder sie emittieren weißes Licht. Wenn die Beleuchtungseinrichtung ein Scheinwerfer ist, werden weißes Licht emittierende LEDs verwendet. Ist die die Beleuchtungseinrichtung dagegen eine Heckleuchte, können auch rotes Licht emittierende LEDs verwendet werden.

Die Primäroptik 14 weist in der dargestellten Ausgestaltung Halbleiterlichtquellen-individuelle Lichtleiterabschnitte 36, 38, 40, 42 und eine aus matrixartig angeordneten Teilgrenzflächen 44, 46, 48, 50 zusammengesetzte Grenzfläche 52 auf. Die Grenzfläche 52 entspricht der Lichtaustrittsfläche 26 aus der Fig. 1.

Die Lichtleiterabschnitte sind bevorzugt aus Silikon hergestellt. Silikon ist ein hochtransparentes Material und weist eine hohe Temperaturbeständigkeit bis ca. 260°C auf. Erhitztes Silikon ist besonders dünnflüssig und kann so während des Spritzgießverfahrens auch in relativ filigrane Strukturen gespritzt werden. In anderen Ausgestaltungen bestehen sie aus Glas, Kunststoff oder einem technisch vergleichbaren Material. Ein Lichtleiterabschnitt und eine zugehörige Teilgrenzfläche sind dazu eingerichtet, von einer zugehörigen Halbleiterlichtquelle aufgenommenes Licht in einer Hauptabstrahlrichtung auf die Sekundäroptik 16 zu richten.

Jeder längliche Lichtleiterabschnitt ist mit seinem seiner Teilgrenzfläche gegenüberliegenden Ende unmittelbar vor der ihm zugeordneten Halbleiterlichtquelle oder Gruppe von Halbleiterlichtquellen angeordnet, um von diesen ausgehendes Licht aufzunehmen. Das aufzunehmende Licht wird zunächst durch Brechung in das Innere des Lichtleiterabschnittes eingekoppelt und dann vorwiegend durch Totalreflexionen, die an seitlichen Transportflächen erfolgen, in Richtung seiner Teilgrenzfläche weitergeleitet. Durch seine besondere Form, die sich durch einen sich in Lichtausbreitungsrichtung aufweitenden Querschnitt auszeichnet, und durch Mehrfachreflexion an den Transportwänden reduziert der Lichtleiter den Öffnungswinkel des ihn durchdringenden Lichtbündels.

Der sich aufweitende Querschnitt wird bevorzugt durch in Lichtausbreitungsrichtung verlaufende Seitenflächen erzielt, die zumindest abschnittsweise konisch verlaufen und/oder konvex und/oder konkav gekrümmt sind und dabei eine trichterförmige Struktur definieren.

In der dargestellten Ausgestaltung nähern sich die Transportflächen benachbarter Lichtleiterabschnitte mit zunehmender Annäherung an die Teilgrenzflächen aneinander an. Je nach Ausgestaltung besteht die Primäroptik 14 aus einzelnen, getrennten Lichtleiterabschnitten oder ist als einstückige Anordnung von Lichtleiterabschnitten realisiert.

In jedem Fall ist bevorzugt, dass die Lichtleiterabschnitte an ihrem Teilgrenzflächen-seitigen Ende optisch miteinander gekoppelt sind. Dabei wird unter einer optischen Kopplung verstanden, dass Licht eines Lichtleiterabschnitts die Primäroptik über die Teilgrenzfläche dieses Lichtleiterabschnitts oder, bei stärker zur Seite gerichteten Strahlen, über die Teilgrenzfläche benachbarter Lichtleiterabschnitte verlassen kann.

Die Teilgrenzflächen sind bevorzugt dazu eingerichtet, die Öffnungswinkel der austretenden Lichtbündel, die in die nachfolgende, abbildende Sekundäroptik 16 gelangen, noch weiter zu verkleinern. Durch die Mehrfachreflexion in den Lichtleiterabschnitten und durch die weitere Bündelung an den Teilgrenzflächen wird eine homogene Leuchtdichteverteilung auf der Grenzfläche 52 zusammengefügt, die keine, oder höchstens stark unterdrückte, Gitterstrukturen aufweist und die die räumliche Trennung zwischen den Halbleiterlichtquellen nicht abbildet.

Gleichzeitig lenken jeweils benachbarte Teilgrenzflächen Inhomogenitäten verursachende Lichtanteile von der abbildenden Sekundäroptik weg, so dass diese nicht zur Abbildung beitragen können und keine störenden Hell-Dunkel-Strukturen in der auf der Fahrbahn erzeugten Lichtverteilung generieren.

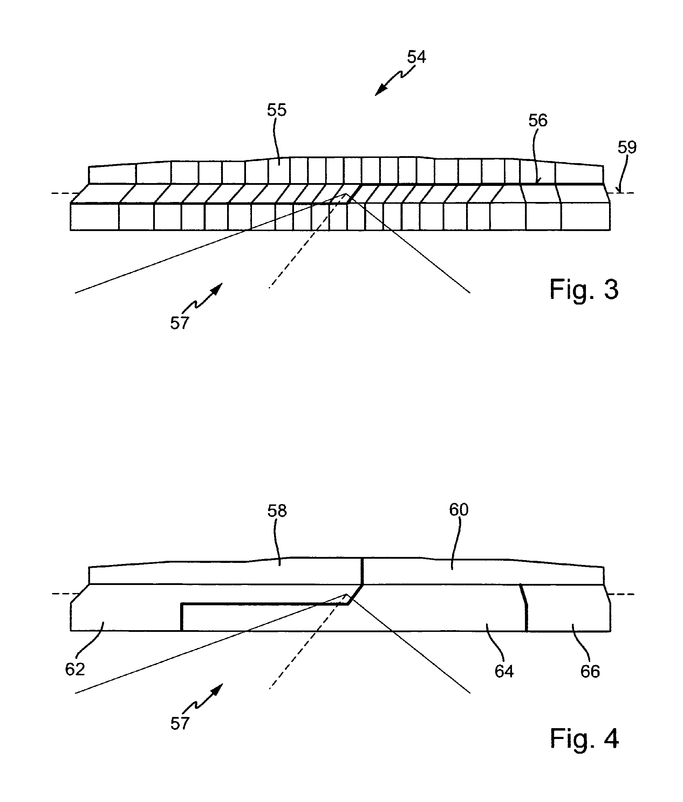

Figur 3 zeigt eine Lichtverteilung 54, die sich mit einer Anordnung von 63 LEDs in drei Zeilen mit je 21 LEDs erzielen lässt, auf einer Fahrbahn 57 relativ zu einem Horizont 59. Die Lichtverteilung 54 wird durch Ausleuchtung vieler benachbarter, zueinander scharf abgegrenzter Felder 55 erzeugt, wobei jedes Feld bevorzugt von einer einzelnen Halbleiterlichtquelle oder einer gemeinsam betriebenen Gruppe von Halbleiterlichtquellen ausgeleuchtet wird. Dabei ist bevorzugt, dass die Ausleuchtung der einzelnen Felder oder Gruppen von Feldern individuell einschaltbar und ausschaltbar ist.

In der dargestellten Ausgestaltung trennt eine Hell-Dunkel-Grenze 56 einen unterhalb der Hell-Dunkel-Grenze 56 liegenden hellen Bereich der Lichtverteilung 54 von einem darüber liegenden dunklen Bereich. Die Lichtverteilung 54 stellt eine typische Lichtverteilung für Landstraßen-Licht bei Rechtsverkehr dar, bei der die Hell-Dunkel-Grenze 56 auf der linken Seite abgesenkt ist, um eine Blendung des Gegenverkehrs zu vermeiden. Insofern können die LEDs die zu oberhalb der Hell-Dunkel-Grenze 56 liegenden Feldern gehören, als blendungskritische LEDs bezeichnet werden, während die übrigen LEDs als blendungsunkritische LEDs bezeichnet werden können. Der für blendungskritische LEDs nach Möglichkeit zu vermeidende Fehler besteht in einem fehlerhaft eingeschalteten Zustand. Der für blendungsunkritische LEDs nach Möglichkeit zu vermeidende Fehler besteht in einem fehlerhaft ausgeschalteten Zustand.

Durch selektives Einschalten und Ausschalten der den verschiedenen Feldern zugeordneten LEDs kann eine Vielzahl unterschiedlicher Lichtverteilungen erzeugt werden. Dabei können sowohl Abblendlicht-Lichtverteilungen als auch Fernlicht-Lichtverteilungen mit ein und demselben Lichtmodul erzeugt werden.

Die Figur 4 veranschaulicht weitere Lichtverteilungen, die mit dem bis hier beschriebenen Gegenstand einstellbar sind. Dabei sind die einzeln ausleuchtbaren Felder (Pixel) ihrer Lage in der insgesamt resultierenden Lichtverteilung entsprechend, verschiedenen Funktionsgruppen zugeordnet. Eine Lichtverteilung repräsentiert eine Teilfernlicht-Lichtverteilung 58 für die linke Seite, während andere Lichtverteilungen eine Teilfernlicht-Lichtverteilung 60 für die rechte Seite, eine Lichtverteilung 62 für eine Ausleuchtung einer Linkskurve, eine Landstraßen-Lichtverteilung 64 und eine Lichtverteilung 66 für eine Ausleuchtung einer Rechtskurve repräsentieren.

In einer Ausgestaltung werden die jeweils an der Erzeugung einer solchen Lichtverteilung beteiligten Gruppen von LEDs durch Überwachen des Stromverbrauchs und des Spannungsabfalls überwacht. Die Überwachung erfolgt bevorzugt durch Vergleich der erfassten Ströme und/oder Spannungen mit für Fehler charakteristischen Grenzwerten. Bevorzugt ist ferner, dass bei einem festgestellten Fehler die jeweils betroffene Funktionsgruppe durch Abschalten der Versorgungsspannung stillgelegt wird.

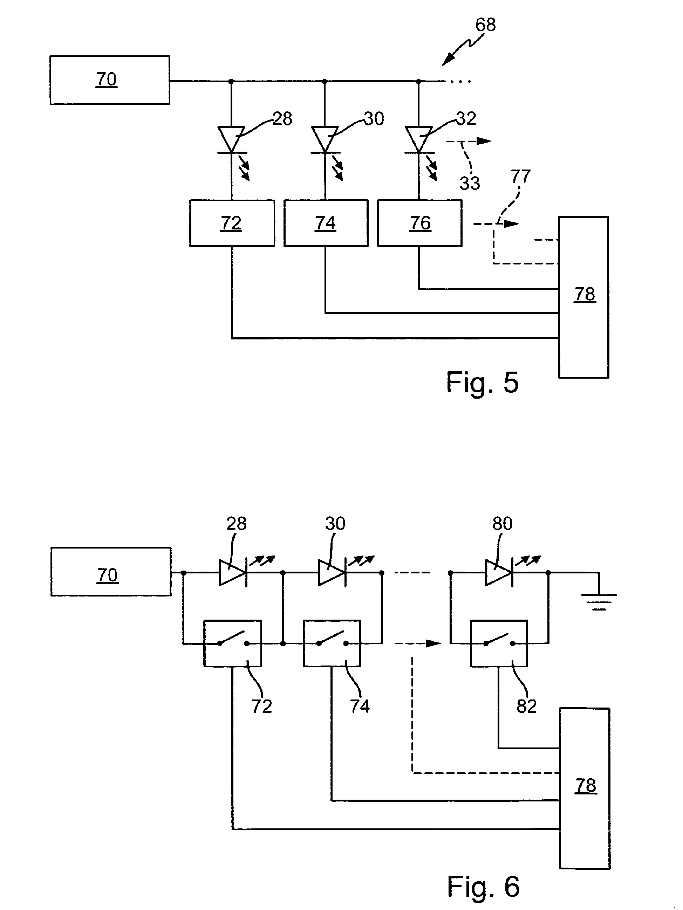

Die Figur 5 zeigt einen Ausschnitt aus einer Ansteuerschaltung für Lichtquellen 28, 30, 32, ..., 33, wobei die Lichtquellen bevorzugt Halbleiterlichtquellen, insbesondere Leuchtdioden (LEDs) sind und wobei der Pfeil 33 ggf. vorhandene weitere Lichtquellen repräsentiert. Dabei liegen die Lichtquellen parallel zueinander und werden über einen gemeinsamen DC/DC-Schaltregler 70 mit Spannung versorgt und über jeweils Lichtquellenindividuelle Schaltelemente 72, 74, 76 und ggf. vorhandene weitere Schaltelemente unabhängig voneinander angesteuert. Die Schaltelemente sind im Rahmen der in dieser Anmeldung vorgestellten Gegenstände bevorzugt Linearregler, die im Allgemeinen aus einem Stellglied, einer Referenzspannungsquelle und einem Fehlerverstärker bestehen. Bei dem Stellglied handelt es sich in der Regel um einen einzelnen Transistor oder um eine Transistorkombination wie eine Darlington-Schaltung.

Die Schaltelemente 72, 74, 76,... werden von einem Mikrocontroller 78 mit PWM-Signalen (PWM = Puls-Weiten-Modulation) angesteuert. Dabei erfolgt die Ansteuerung so, dass sich die gewünschte Lichtverteilung einstellt. Der DC/DC-Schaltregler 70 sorgt dabei für eine möglichst konstante, von der Zahl der gerade eingeschalteten Lichtquellen 72, 74, 76,... unabhängigen Spannungsabfall über diesen Lichtquellen. Jede Lichtquelle verfügt daher über ein jeweils eigenes, in Reihe mit ihr liegendes Schaltelement, mit dem ihr Betriebsstrom unabhängig von den Betriebsströmen der anderen Lichtquellen geregelt werden kann.

Figur 6 zeigt eine Serienschaltung von Lichtquellen 28, 30, ..., 80. Die Serienschaltung wird über einen DC/DC-Schaltregler 70 mit Strom versorgt. Über Lichtquellenindividuelle und parallel zu jeder Lichtquelle 28, 30, ..., 80 liegende Schaltelemente 72, 74, ..., 82 werden die jeweiligen Lichtquellen individuell ein- und ausgeschaltet. Die Schaltelemente werden mit dem Mikrocontroller 78 gesteuert. Bei geschlossenem Schaltelement ist die zugeordnete Lichtquelle jeweils ausgeschaltet. Bei geöffnetem Schaltelement ist die zugeordnete Lichtquelle eingeschaltet. Über eine Puls-Weiten-Modulation des Ansteuersignals können die Lichtquellen gedimmt werden.

An einen Schaltregler 70 ist dabei eine Gruppe von Lichtquellen angeschlossen. Dies gilt auch für die Parallelschaltung nach Figur 5. Die Ansteuerschaltung umfasst in der Regel mehrere Gruppen von LED-Lichtquellen und damit auch mehrere Schaltregler.

Die Schaltungen nach den Figuren 5 und 6, bei denen jeweils genau ein Schaltelement genau eine Lichtquelle, insbesondere eine Halbleiterlichtquelle, ein- und ausschaltet, repräsentieren den Stand der Technik, von dem die Erfinder ausgehen.

Dagegen zeichnet sich die Erfindung dadurch aus, dass die

Ansteuerschaltung an Stelle des genau einen Schaltelements, das genau einer Lichtquelle zugeordnet ist, mehrere redundante Schaltelemente aufweist und dazu eingerichtet ist, den Stromfluss durch die zugeordnete Lichtquelle durch eine synchrone Betätigung der redundanten Schaltelemente zu steuern. Dabei kann die Lichtquelle eine oder auch mehrere LEDs aufweisen.

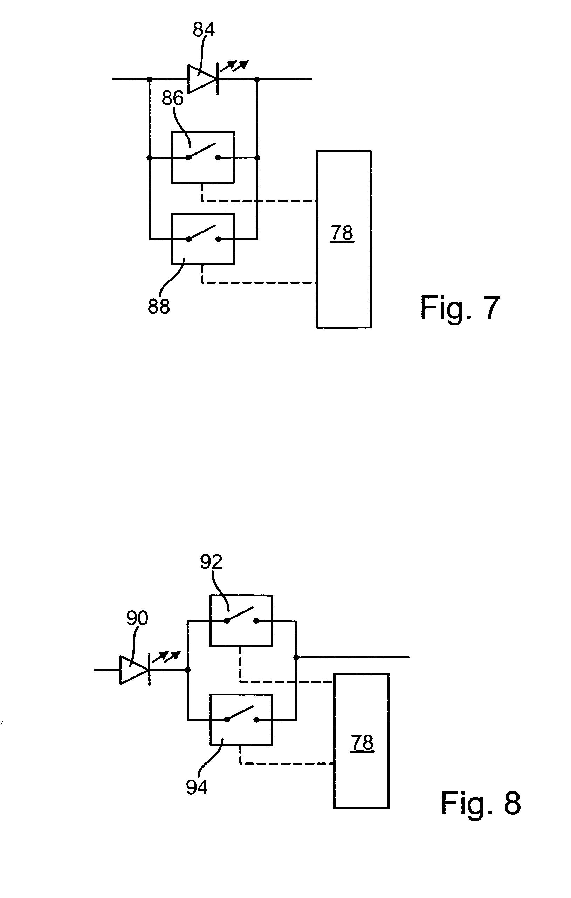

Figur 7 zeigt eine Ausgestaltung, bei der n=2 Schaltelemente 86, 88 parallel zu einer Lichtquelle in Form einer Leuchtdiode 84 geschaltet sind. Die beiden Schaltelemente 86, 88 werden von einem Mikrocontroller 78 betätigt. Der Mikrocontroller 78 ist dazu eingerichtet, die n parallel geschalteten Schaltelemente synchron zu öffnen und zu schließen. Die Steuerung des synchronen Öffnens und Schließens kann zum Beispiel dadurch erfolgen, dass die gemeinsam zu betätigenden Schaltelemente gemeinsam über einen einzigen Ausgang des Mikrokontrollers 78 gesteuert werden. Dies gilt im Übrigen auch für die weiteren in dieser Anmeldung vorgestellten Ausgestaltungen. Die Zahl n der parallel geschalteten Schaltelemente kann auch größer als 2 sein. Dies gilt auch für die Weiteren, in dieser Anmeldung vorgestellten Ausgestaltungen. Eine solche Substitution eines einzelnen Schaltelementes durch n parallel geschaltete und synchron betätigte Schaltelemente erhöht die Sicherheit gegen ein ungewolltes Einschalten der Lichtquelle 84. Die Lichtquelle 84 leuchtet nur dann, wenn beide Schaltelemente korrekt öffnen. Eine Unterbrechung von einem der beiden Schaltelemente beeinträchtigt die Steuerbarkeit der Lichtquelle 84 damit nicht.

Figur 8 zeigt eine Ausgestaltung, bei der eine Lichtquelle 90 n = zwei Schaltelemente 92, 94 aufweist, die parallel zueinander liegen, von einem Mikrocontroller 78 synchron betätigt werden, und mit der Lichtquelle 90 in Reihe geschaltet sind. Bei dieser Ausgestaltung ergibt sich eine erhöhte Sicherheit gegen ein ungewolltes Ausschalten der Lichtquelle 90. Die Lichtquelle 90 wird nur dann ausgeschaltet, wenn beide Schaltelemente 92, 94 korrekt öffnen. Eine Unterbrechung von einem der beiden Schaltelemente beeinträchtigt die Steuerbarkeit der Lichtquelle 90 damit nicht. Auch hier kann n größer als zwei sein.

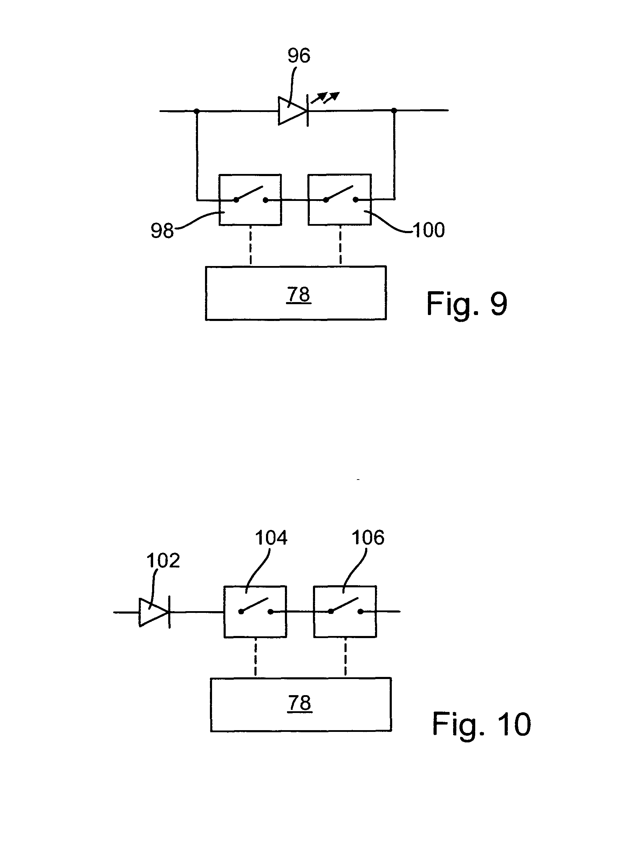

Figur 9 zeigt eine Ausgestaltung, bei der einer Lichtquelle 96 eine Reihenschaltung aus n=2 Schaltelementen 98, 100 parallel geschaltet ist. Diese Schaltung erhöht die Sicherheit gegen ein ungewolltes Ausschalten der Lichtquelle 96. Die Lichtquelle 96 wird nur dann ausgeschaltet, wenn beide Schaltelemente schließen. Ein Kurzschluss in nur einem der beiden Schaltelemente beeinträchtigt die Steuerbarkeit der Lichtquelle 96 damit nicht. Auch hier kann n größer als zwei sein.

Figur 10 zeigt eine Ausgestaltung, bei der eine Lichtquelle 102 eine Reihenschaltung mit n = zwei in Reihe geschalteten Schaltelementen 104 und 106 bildet. Diese Schaltung besitzt eine erhöhte Sicherheit gegen ein ungewolltes Einschalten der Lichtquelle 102, da die Lichtquelle 102 nur leuchtet, wenn beide Schaltelemente 104, 106 schließen. Für ein Ausschalten ist es daher ausreichend, dass lediglich eines der beiden Schaltelemente 104, 106 korrekt öffnet. Ein dauerhafter Kurzschluss in nur einem der beiden Schaltelemente 104, 106 beeinträchtigt die korrekte Steuerbarkeit der Lichtquelle 102 dagegen nicht. Auch hier kann n größer als zwei sein.

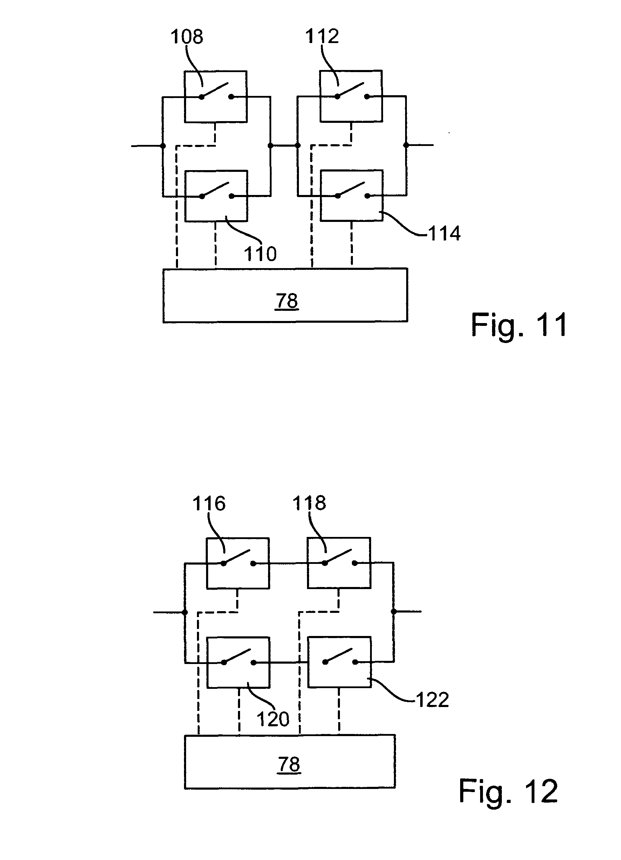

Figur 11 zeigt eine Ausgestaltung, bei der ein einzelnes Schaltelement einer Lichtquelle durch eine Reihenschaltung von Parallelschaltungen von Schaltelementen substituiert worden ist. Zwei Schaltelemente 108 und 110 bilden eine erste Gruppe von Schaltelementen und zwei weitere Schaltelemente 112, 114 bilden eine weitere Gruppe von Schaltelementen. Innerhalb jeder Gruppe sind die Schaltelemente der jeweiligen Gruppe jeweils parallel zueinander geschaltet. Die erste Gruppe und die zweite Gruppe sind miteinander in Reihe geschaltet. Es können auch mehr als zwei Gruppen verwendet werden und jede Gruppe kann mehr als zwei Schaltelemente aufweisen.

Figur 12 zeigt eine Ausgestaltung, bei der ein einzelnes Schaltelement einer Lichtquelle durch eine Parallelschaltung von Reihenschaltungen von Schaltelementen substituiert worden ist. Zwei Schaltelemente 116 und 118 bilden eine erste Gruppe von Schaltelementen und weitere Schaltelemente 120, 122 bilden eine zweite Gruppe von Schaltelementen. Innerhalb jeder Gruppe sind die Schaltelemente einer Gruppe jeweils in Reihe miteinander geschaltet. Die erste und die zweite Gruppe sind parallel zueinander geschaltet. Es können auch mehr als zwei Gruppen verwendet werden und jede Gruppe kann mehr als zwei Schaltelemente aufweisen.

Im Vergleich mit einem einzelnen Schaltelement bieten die beiden Schaltungen nach den Figuren 11 und 12 sowohl eine erhöhte Sicherheit für ein Einschalten eines Stromflusses über die betreffende Schaltung als auch für ein Ausschalten eines Stromflusses über die betreffende Schaltung. So gilt beispielsweise für den Gegenstand der Figur 11 das Folgende:
Bei einem Kurzschluss des Schaltelements 108 lässt sich der Stromfluss durch Öffnen der Schaltelemente 112 und 114 unterbrechen. Bei einer fehlerhaften Unterbrechung des Schaltelements 108 lässt sich der Stromfluss durch den korrekt geschlossenen Schalter 110 aufrecht erhalten.
Analog gilt für den Gegenstand der Figur 12 zum Beispiel Folgendes: Bei einem Kurzschluss des Schaltelementes 116 lässt sich der Stromfluss durch die Schaltung durch korrektes Öffnen der übrigen Schalter 118, 120, 122 sicher unterbrechen. Bei einer fehlerhaften Unterbrechung des Schaltelements 116 lässt sich ein Stromfluss über die korrekt geschlossenen Schaltelemente 120, 122 der anderen Gruppe aufrecht erhalten.

Unterschiede zwischen den beiden Schaltungen nach den Figuren 11 und 12 ergeben sich jedoch dann, wenn mehr als ein Schaltelement defekt ist. Nimmt man zum Beispiel an, dass beim Gegenstand der Figur 11 das Schaltelement 108 und ein weiteres Schaltelement kurzgeschlossen ist und damit fehlerhaft leitet, kommt als zweites fehlerhaft leitendes Schaltelement das Schaltelement 110, das Schaltelement 112 oder das Schaltelement 114 in Frage. Ein fehlerhafter (unerwünschter) Stromfluss über die Schaltung nach der Figur 11 ergibt sich dann in zwei Fällen, nämlich dann, wenn entweder das Schaltelement 112 oder das Schaltelement 114 zusätzlich zum Schaltelement 108 ebenfalls kurzgeschlossen ist.

Betrachtet man dagegen die Schaltung nach der Figur 12 unter der vergleichbaren Prämisse, dass das Schaltelement 116 und ein weiteres Schaltelement einen Kurzschluss aufweist, ergibt sich ein fehlerhafter Stromfluss über die gesamte Schaltung nach der Figur 12 nur dann, wenn das zweite fehlerhaft leitende Schaltelement das Schaltelement 118 ist. Damit ist die Wahrscheinlichkeit, dass die Schaltung nach der Figur 12 fehlerhaft Strom leitet, jedenfalls kleiner als die Wahrscheinlichkeit, dass die Schaltung nach Figur 11 fehlerhaft Strom leitet. In Analogie ergibt sich, dass die Wahrscheinlichkeit, dass die Schaltung nach Figur 11 unerwünscht keinen Strom leitet, jedenfalls kleiner ist als die Wahrscheinlichkeit, dass die Schaltung nach Figur 12 unerwünscht keinen Strom leitet.

Bei parallel zu solchen Schaltungen nach den Figuren 11 oder 12 geschalteter Lichtquelle ist damit die Schaltung nach der Figur 11 besser für blendungskritische Lichtquellen, also insbesondere für Fernlicht-Lichtquellen, geeignet. Dagegen eignet sich die Schaltung nach der Figur 12 bei in Reihe geschalteter Lichtquelle besser für blendungskritische Lichtquellen.

Bei blendungsunkritischen Lichtquellen, also insbesondere bei Abblendlicht-Lichtquellen ergeben sich umgekehrte Präferenzen. Dementsprechend unterscheiden sich die bevorzugten Einsatzgebiete der Schaltungen nach den Figuren 11 und 12. Schaltungen nach der Figur 11 eignen sich eher als Ersatz von parallel geschalteten Schaltelementen, wie sie bei den Gegenständen der Figuren 7 und 8 verwendet werden. Schaltungen nach der Figur 12 eignen sich eher als Ersatz von in Reihe geschalteten Schaltelementen, wie sie bei den Gegenständen der Figuren 9 und 16 verwendet werden.

In allen Fällen kann die Ausfallsicherheit des Lichtmoduls weiter erhöht werden, wenn auch vorgeschaltete elektronische und elektromechanische Bauelemente, insbesondere die vergleichsweise anfälligen aktiven elektronischen Bauelemente, sowie etwa vorhandene Steckverbinder, redundant ausgeführt werden.

Dabei werden den jeweiligen Bauelementen bevorzugte zusätzliche Reserveelemente parallel geschaltet. In einer vorteilhaften Ausgestaltung weist die Leiterplatte, auf der die Ansteuerschaltungen bevorzugt gemeinsam mit den Lichtquellen angeordnet sind, Prüfkontakte auf, an denen die ordnungsgemäße Funktion der redundanten Elemente einzeln geprüft werden kann. Auf diese Weise kann erreicht werden, dass Leiterplatten mit defekten Reserveelementen, bei denen die Redundanz nicht mehr gewährleistet ist, bei einer Bandendeprüfung am Ende eines Herstellungsprozesses erkannt und nicht weiterverarbeitet werden.

In einer Ausgestaltung ist jeweils für eine einzige Lichtquelle eine eigene Ansteuerschaltung vorgesehen. Alternativ dazu können aber auch mehrere Lichtquellen, beispielsweise verschiedene Lichtquellen, die zur Realisierung einer Lichtfunktion, beispielsweise einer Teilfernlicht-Lichtfunktion, gemeinsam geschaltet werden, zusammen durch eine einzige Ansteuerschaltung geschaltet werden. Mit anderen Worten: Die Lichtquellen sind in einzelnen schaltbare Einzellichtquellen oder Lichtquellengruppen unterteilt, wobei für das Schalten jeder Einzellichtquellen oder Lichtquellengruppe mehr als ein Schaltelement vorgesehen ist.

Die Einzellichtquellen oder Lichtquellengruppen sind, je nach Ausgestaltung, in Serie oder parallel zueinander geschaltet. Bevorzugt ist auch, dass in Abhängigkeit von den der jeweiligen Lichtquelle oder Lichtquellengruppe zugeordneten Lichtfunktionen nur bestimmte Einzellichtquellen oder Lichtquellengruppen mit redundanten Schaltelementen ausgestattet sind.

Bevorzugt ist auch, dass die Lichtquellen in Abhängigkeit von ihrer lichttechnischen Funktion gruppiert werden, wobei eine oder mehrere Gruppen von einer gemeinsamen elektrischen Spannungsquelle (DC/DC-Schaltregler) versorgt wird und jede Gruppe über eine gemeinsame Ansteuerschaltung geschaltet werden kann. Bevorzugt ist auch, dass die Versorgungsspannung und/oder der Strom an mindestens einer Lichtquellengruppe ermittelt wird, um gegebenenfalls eine Fehlfunktion dieser Lichtquellengruppe zu detektieren.

## Patentansprüche

1. Beleuchtungseinrichtung (10) für ein Kraftfahrzeug mit wenigstens einer Lichtquelle (28, 30, 32), die dazu eingerichtet ist, aus zugeführter elektrischer Energie Licht zu erzeugen, und mit einer Ansteuerschaltung (68), die dazu eingerichtet ist, einen elektrischen Stromfluss durch die wenigstens eine Lichtquelle (28) durch eine Betätigung wenigstens eines mit der wenigstens einen Lichtquelle (28) gekoppelten Schaltelements (72) zu steuern, **dadurch gekennzeichnet, dass** die Ansteuerschaltung mehrere redundante Schaltelemente (86, 88) aufweist und dazu eingerichtet ist, den Stromfluss durch eine gemeinsame Betätigung der redundanten Schaltelemente (86, 88) zu steuern, wobei die redundanten Schaltelemente (86, 88) jeweils gemeinsam eingeschaltet und ausgeschaltet werden.

2. Beleuchtungseinrichtung (10) nach Anspruch 1, **dadurch gekennzeichnet, dass** die Ansteuerschaltung parallel zu der Lichtquelle (84; 96) geschaltet ist.

3. Beleuchtungseinrichtung (10) nach Anspruch 2, **dadurch gekennzeichnet, dass** wenigstens zwei redundante Schaltelemente (86, 88) der Ansteuerschaltung zueinander und zu der Lichtquelle (90) parallel geschaltet sind.

4. Beleuchtungseinrichtung (10) nach Anspruch 2, **dadurch gekennzeichnet, dass** wenigstens zwei redundante Schaltelemente (98, 100) der Ansteuerschaltung in Reihe zueinander geschaltet sind, wobei die Reihenschaltung der Schaltelemente (98, 100) parallel zu der Lichtquelle (96) geschaltet ist.

5. Beleuchtungseinrichtung (10) nach Anspruch 1, **dadurch gekennzeichnet, dass** die Ansteuerschaltung in Reihe zu der Lichtquelle (90, 102) geschaltet ist.

6. Beleuchtungseinrichtung (10) nach Anspruch 5, **dadurch gekennzeichnet, dass** wenigstens zwei redundante Schaltelemente (92, 94) der Ansteuerschaltung parallel zueinander und zu der Lichtquelle (90) in Reihe geschaltet sind.

7. Beleuchtungseinrichtung (10) nach Anspruch 5, **dadurch gekennzeichnet, dass** wenigstens zwei redundante Schaltelemente (104, 106) der Ansteuerschaltung in Reihe zueinander geschaltet sind, wobei die Reihenschaltung der Schaltelemente (104, 106) in Reihe zu der Lichtquelle (102) geschaltet ist.

8. Beleuchtungseinrichtung (10) nach Anspruch 2 oder 5, **dadurch gekennzeichnet, dass** die redundanten Schaltelemente wenigstens eine erste Gruppe von Schaltelementen (108, 110) und wenigstens eine zweite Gruppe von Schaltelementen (112, 114) aufweisen, wobei die erste Gruppe untereinander parallel geschaltete Schaltelemente (108, 110) aufweist, die zweite Gruppe untereinander parallel geschaltete Schaltelemente (112, 114) aufweist, und die erste Gruppe und die zweite Gruppe zueinander in Reihe geschaltet sind.

9. Beleuchtungseinrichtung (10) nach Anspruch 2 oder 5, **dadurch gekennzeichnet, dass** die redundanten Schaltelemente wenigstens eine erste Gruppe von Schaltelementen (116, 118) und wenigstens eine zweite Gruppe von Schaltelementen (120, 122) aufweisen, wobei die erste Gruppe untereinander in Serie geschaltete Schaltelemente (116, 118) aufweist, die zweite Gruppe untereinander in Serie geschaltete Schaltelemente (120, 122) aufweist, und die erste Gruppe und die zweite Gruppe zueinander parallel geschaltet sind.

10. Beleuchtungseinrichtung (10) nach einem der vorhergehenden Ansprüche, **dadurch gekennzeichnet, dass** die Beleuchtungseinrichtung (10) ein mehrere Lichtquellen oder Gruppen von Lichtquellen aufweisender Frontscheinwerfer ist, der dazu eingerichtet ist, mit einer ersten Lichtquelle oder ersten Gruppe von Lichtquellen wenigstens eine erste Lichtverteilung zu erzeugen, bei der nur eine vergleichsweise geringere Blendungsgefahr für den Gegenverkehr besteht, und mit einer zweiten Lichtquelle oder Gruppe von Lichtquellen eine zweite Lichtverteilung zu erzeugen, bei der eine vergleichsweise größere Blendgefahr für den Gegenverkehr besteht, **dadurch gekennzeichnet, dass** eine zur ersten Lichtverteilung beitragende Lichtquelle eine Ansteuerschaltung nach einem der Ansprüche 4, 6, 8, 9 aufweist, und dass eine zur zweiten Lichtverteilung beitragende Lichtquelle eine Ansteuerschaltung nach einem der Ansprüche 3, 7, 8, 9 aufweist.

11. Beleuchtungseinrichtung (10) nach einem der vorhergehenden Ansprüche, **dadurch gekennzeichnet, dass** die Ansteuerschaltung für jedes Schaltelement Prüfkontakte aufweist, die eine zu Prüfzwecken erfolgende Kontaktierung der Schaltelemente bei der Fertigung der Ansteuerschaltung erlauben.

## Claims

1. A lighting device (10) for a motor vehicle, having at least one light source (28, 30, 32), which is arranged for generating light from supplied electrical energy, and having a control circuit (68), which is arranged for controlling an electrical current flow through the at least one light source (28) by means of an actuation of at least one switch element (72), coupled with the at least one light source (28), **characterized in that** the control circuit has a plurality of redundant switch elements (86, 88) and is arranged for controlling the flow of current by means of a joint actuation of the redundant switch elements (86, 88), the redundant switch elements (86, 88) being switched on and off jointly with one another.

2. The lighting device (10) of claim 1, **characterized in that** the control circuit is connected in parallel with the light source (84; 96).

3. The lighting device (10) of claim 2, **characterized in that** at least two redundant switch elements (86, 88) of the control circuit are connected in parallel with one another and with the light source (90).

4. The lighting device (10) of claim 2, **characterized in that** at least two redundant switch elements (98, 100) of the control circuit are connected in series with one another, the series circuit of the switch elements (98, 100) being connected in parallel with the light source (96).

5. The lighting device (10) of claim 1, **characterized in that** the control circuit is connected in series with the light source (90, 102).

6. The lighting device (10) of claim 5, **characterized in that** at least two redundant switch elements (92, 94) of the control circuit are connected in parallel with one another and in series with the light source (90).

7. The lighting device (10) of claim 5, **characterized in that** at least two redundant switch elements (104, 106) of the control circuit are connected in series with one another, the series circuit of the switch elements (104, 106) being connected in series with the light source (102).

8. The lighting device (10) of claim 2 or 5, **characterized in that** the redundant switch elements have at least one first group of switch elements (108, 110) and at least one second group of switch elements (112, 114), the first group having switch elements (108, 110) connected in parallel with one another, the second group having switch elements (112, 114) connected in parallel with one another, and the third group and the second group being connected in series with one another.

9. The lighting device (10) of claim 2 or 5, **characterized in that** the redundant switch elements have at least one first group of switch elements (116, 118) and at least one second group of switch elements (120, 122), the first group having switch elements (116, 118) connected in series with one another, the second group having switch elements (120, 122) connected in series with one another, and the first group and the second group being connected in parallel with one another.

10. The lighting device (10) of one of the foregoing claims, **characterized in that** the lighting device (10) is a headlight having a plurality of light sources or groups of light sources, which is arranged for generating at least one first light distribution having a first light source or first group of light sources, in which distribution there is only a comparatively lesser risk of glare for the oncoming traffic, and generating a second light distribution having a second light source or group of light sources, in which distribution there is a comparatively greater risk of glare for the oncoming traffic, **characterized in that** a light source contributing to the first light distribution has a control circuit of one of claims 4, 6, 8, 9; and that a light source contributing to the second light distribution has a control circuit of one of claims 3, 7, 8, 9.

11. The lighting device (10) of one of the foregoing claims, **characterized in that** the control circuit, for each switch element, has test contacts, which allow making electrical contact with the switch elements for the sake of testing during the manufacture of the control circuit.

## Revendications

1. Dispositif d'éclairage (10) pour un véhicule automobile avec au moins une source de lumière (28, 30, 32), qui est conçue en vue de produire de la lumière à partir d'énergie électrique fournie, et avec un circuit de commande (68), qui est conçu en vue de commander un flux de courant électrique à travers ladite au moins une source de lumière (28) par un actionnement d'au moins un élément de commutation (72) couplé à ladite au moins une source de lumière (28), **caractérisé en ce que** le circuit de commande présente plusieurs éléments de commutation redondants (86, 88) et est conçu afin de commander le flux de courant par un actionnement commun des éléments de commutation redondants (86, 88), dans lequel les éléments de commutation redondants (86, 88) sont respectivement enclenchés et déclenchés en commun.

2. Dispositif d'éclairage (10) selon la revendication 1, **caractérisé en ce que** le circuit de commande est monté en parallèle avec la source de lumière (84; 96).

3. Dispositif d'éclairage (10) selon la revendication 2, **caractérisé en ce qu'**au moins deux éléments de commutation redondants (86, 88) du circuit de commande sont montés en parallèle l'un avec l'autre et avec la source de lumière (90).

4. Dispositif d'éclairage (10) selon la revendication 2, **caractérisé en ce qu'**au moins deux éléments de commutation redondants (98, 100) du circuit de commande sont montés en série l'un avec l'autre, dans lequel le montage en série des éléments de commutation (98, 100) est monté en parallèle avec la source de lumière (96).

5. Dispositif d'éclairage (10) selon la revendication 1, **caractérisé en ce que** le circuit de commande est monté en série avec la source de lumière (90, 102).

6. Dispositif d'éclairage (10) selon la revendication 5, **caractérisé en ce qu'**au moins deux éléments de commutation redondants (92, 94) du circuit de commande sont montés en parallèle l'un avec l'autre et en série avec la source de lumière (90).

7. Dispositif d'éclairage (10) selon la revendication 5, **caractérisé en ce qu'**au moins deux éléments de commutation redondants (104, 106) du circuit de commande sont montés en série l'un avec l'autre, dans lequel le montage en série des éléments de commutation (104, 106) est monté en série avec la source de lumière (102).

8. Dispositif d'éclairage (10) selon la revendication 2 ou 5, **caractérisé en ce que** les éléments de commutation redondants présentent au moins un premier groupe d'éléments de commutation (108, 110) et au moins un deuxième groupe d'éléments de commutation (112, 114), dans lequel le premier groupe présente des éléments de commutation (108, 110) montés en parallèle entre eux, le deuxième groupe présente des éléments de commutation (112, 114) montés en parallèle entre eux, et le premier groupe et le deuxième groupe sont montés en série l'un avec l'autre.

9. Dispositif d'éclairage (10) selon la revendication 2 ou 5, **caractérisé en ce que** les éléments de commutation redondants présentent au moins un premier groupe d'éléments de commutation (116, 118) et au moins un deuxième groupe d'éléments de commutation (120, 122), dans lequel le premier groupe présente des éléments de commutation (116, 118) montés en série entre eux, le deuxième groupe présente des éléments de commutation (120, 122) montés en série entre eux, et le premier groupe et le deuxième groupe sont montés en parallèle l'un avec l'autre.

10. Dispositif d'éclairage (10) selon l'une quelconque des revendications précédentes, **caractérisé en ce que** le dispositif d'éclairage (10) est un projecteur avant comportant plusieurs sources de lumière ou groupes de sources de lumière, qui est conçu pour produire, avec une première source de lumière ou un premier groupe de sources de lumière, une première distribution de lumière, avec laquelle il n'existe qu'un risque relativement plus faible d'éblouissement pour le trafic inverse, et pour produire, avec une deuxième source de lumière ou un deuxième groupe de sources de lumière, une deuxième distribution de lumière, avec laquelle il existe un risque relativement plus grand d'éblouissement pour le trafic inverse, **caractérisé en ce qu'**une source de lumière contribuant à la première distribution de lumière présente un circuit de commande selon l'une quelconque des revendications 4, 6, 8, 9, et **en ce qu'**une source de lumière contribuant à la deuxième distribution de lumière présente un circuit de commande selon l'une quelconque des revendications 3, 7, 8, 9.

11. Dispositif d'éclairage (10) selon l'une quelconque des revendications précédentes, **caractérisé en ce que** le circuit de commande pour chaque élément de commutation présente des contacts de contrôle, qui permettent d'effectuer une mise en contact des éléments de commutation dans un but de contrôle lors de la fabrication du circuit de commande.
